# EUROPEAN PATENT APPLICATION

(11) **EP 4 674 641 A1**
(43) Date of publication of application: **07.01.2026**
(21) Application number: 24186319.0
(22) Date of filing: 03.07.2024
(51) Int. Cl.: B60C 7/24

(54) **SEMI-PNEUMATIC TIRE AND METHOD FOR METHOD FOR MAKING A SEMI-PNEUMATIC TIRE OR A WHEEL**

(71) Applicant: Largo d.o.o., 31311 Uzice (RS)
(72) Inventor: VASILJEVIC, Goran, 31311 Buar, Uzice (CS)
(74) Representative: Kudla, Christof

(57) **Abstract**

The present invention relates to a semi-pneumatic tire comprising or consisting of a tread adapted to contact a ground surface as the semi-pneumatic tire rotates about an axis of rotation, a base arranged predominantly parallel to the tread, and a first sidewall and a second sidewall, each extending radially outward from the tread to the base, wherein the sidewalls are predominantly parallel to each other, wherein the tread, the base and the sidewalls collectively define a continuous hollow space around the circumference of the tire, wherein the base consists of a first connecting piece, a second connecting piece and a middle piece, wherein the middle piece is positioned between the first and the second connecting pieces, wherein the tread, the first sidewall, the second sidewall, the first connecting piece, and the second connecting piece are a first integrated part, and the middle piece is a second integrated part. The present invention relates also to a wheel comprising or consisting of a rim and a tire according to the present invention, a use of a tire according to the invention or a wheel to the invention as part of a vehicle. The present invention relates also to a method for making a semi-pneumatic tire or a wheel comprising a semi-pneumatic tire according to the present invention.

## Description

The present invention relates to a semi-pneumatic tire comprising or consisting of a tread adapted to contact a ground surface as the semi-pneumatic tire rotates about an axis of rotation, a base arranged predominantly parallel to the tread, and a first sidewall and a second sidewall, each extending radially outward from the tread to the base, wherein the sidewalls are predominantly parallel to each other, wherein the tread, the base and the sidewalls collectively define a continuous hollow space around the circumference of the tire, wherein the base consists of a first connecting piece, a second connecting piece and a middle piece, wherein the middle piece is positioned between the first and the second connecting pieces, wherein the tread, the first sidewall, the second sidewall, the first connecting piece, and the second connecting piece are a first integrated part, and the middle piece is a second integrated part. The present invention relates also to a wheel comprising or consisting of a rim and a tire according to the present invention, a use of a tire according to the invention or a wheel to the invention as part of a vehicle. The present invention relates also to a method for making a semi-pneumatic tire or a wheel comprising a semi-pneumatic tire according to the present invention.

Tires are mounted on various types of tractors and their implements. These tires are designed to support the vehicle's load, transmit power from the vehicle to the ground, and absorb vibrations or shocks from the terrain during field operations.

Typically, pneumatic tires have been predominantly used for these purposes. Pneumatic tires maintain internal air pressure, providing excellent cushioning and flexibility, which results in superior ride comfort and vibration absorption. However, if a pneumatic tire is punctured or damaged, it can no longer maintain its air pressure, rendering it ineffective. This loss of function can halt operations, leading to significant downtime and delays while the tire is repaired or replaced. In agricultural settings, where timely soil cultivation is crucial, such interruptions can adversely affect productivity and efficiency. Additionally, the process of repairing or replacing damaged pneumatic tires in the field can be time-consuming and labor-intensive, further exacerbating the issue.

To address these issues, non-pneumatic tires have been developed, which do not require air filling. While non-pneumatic tires are puncture-resistant in various driving conditions, they lack the flexibility of air-filled tires, leading to significantly reduced ride comfort and vibration absorption and they are heavier than pneumatic tires. This is particularly problematic for agricultural machinery used in soil cultivation, where effective shock absorption and stability are critical.

Semi-pneumatic tires have been developed to solve these problems. These tires combine the benefits of both pneumatic and non-pneumatic tires. By incorporating a continuous hollow space within the tire, semi-pneumatic tires provide enhanced flexibility and shock absorption comparable to that of pneumatic tires, while eliminating the risk of punctures. Moreover, the sidewalls of pneumatic tires are typically thinner than those of semi-pneumatic tires. The thicker sidewalls of semi-pneumatic tires make them much better suited for agricultural machinery, as they can withstand the heavy forces encountered during soil cultivation.

In US2020016933A1, a semi-pneumatic tire is described that features a continuous channel defined by spaced-apart sidewalls. These sidewalls are connected at one end to a bridging member and at the other end to a contact member, which is in turn coupled to a disc contact portion. The tire is manufactured through rotational molding of polyurethane and is designed to be mounted on a wheel rim.

However, the manufacturing process for semi-pneumatic tires is more complex and costly. Precise molding techniques are required to ensure the continuous channel and correct alignment of sidewalls, bridging members, and contact members. The use of materials like rubber demands careful control of temperature and pressure during rotational molding. These manufacturing complexities can limit production scalability and increase costs, affecting the overall market adoption of semi-pneumatic tires. Additionally, the manufacturing processes currently in use are typically time-consuming.

A common issue with traditional manufacturing methods for semi-pneumatic tires is the uneven thickness of the sidewalls. This problem arises when the material is not uniformly distributed during the casting or molding process. Uneven sidewall thickness can compromise the structural integrity of the tire, leading to reduced performance and durability. For semi-pneumatic tires used in agricultural machinery and heavy vehicles, uniform sidewall thickness is crucial to withstand the significant forces and loads they encounter. Inconsistencies in wall thickness can result in inadequate shock absorption and increased susceptibility to cracks and other damages, thereby affecting the safety and efficiency of the vehicles. Consequently, there is an urgent need for improved manufacturing methods that ensure even material distribution and uniform sidewall thickness.

The objective of the present invention was to provide a method that simplifies the manufacturing of semi-pneumatic tires, while also enabling faster production. Another objective of the present invention was to provide a method that addresses the problem of uneven sidewall thickness in the tires during the manufacturing process.

The objective of the present invention was solved by a method for making a semi-pneumatic tire or a wheel comprising a semi-pneumatic tire, preferably a semi-pneumatic tire according to the invention, comprising the following steps:
i) forming a first integrated part comprising or consisting of a tread (2), a base (3), a first sidewall (4), a second sidewall (5), and a first connecting piece (7) a second connecting piece (8) of a base (3),
ii) forming a second integrated part comprising or consisting of a central piece (9),
   and
iii) combining the first integrated part and the second integrated part into an assembly in which the central piece (9) is positioned between the first and the second connecting pieces (7,8) and the central piece (9) together with the first and the second connecting pieces (7,8) form a base (3) and the base (3), the tread (2) and the sidewalls (4, 5) collectively define a continuous hollow space (6) around the circumference of the tire (1).

Surprisingly, it has been found that the previously mentioned disadvantages can be overcome in an inventive method for producing a semi-pneumatic tire. By manufacturing a first integrated part and separately manufacturing a second integrated part, and subsequently assembling both parts into an inventive semi-pneumatic tire, the disadvantages can be overcome.

The advantage of this method for producing a semi-pneumatic tire lies in its ability to address and resolve the issue of uneven sidewall thickness, which is a common problem in traditional manufacturing processes. By forming a first integrated part, which includes the tread, base, sidewalls, and connecting pieces, separately from the second integrated part, the central piece, the process allows for greater precision and control over the material distribution. This separate manufacturing and subsequent assembly ensure that the material flows uniformly within the mold, resulting in consistent wall thickness. Consequently, this method enhances the structural integrity, performance, and durability of the semi-pneumatic tires, making them more reliable and efficient for use in agricultural machinery. The improved uniformity and quality of the tires lead to better shock absorption and resistance to damage, thereby increasing the overall safety and efficiency of the vehicles in which they are used.

According to the present invention, an "integrated part" is a component that is manufactured as a single, cohesive unit, without any seams, adhesive joints, or mechanical fastenings that might otherwise join separate parts together. This seamless construction ensures that the part is uniformly strong and durable, with no weak points where different pieces are bonded or fused. For instance, in the context of the semi-pneumatic tire, the first integrated part might include the tread, base, sidewalls, and connecting pieces, all formed together as one continuous piece. Similarly, the second integrated part would consist solely of the central piece, also made as a single unit. The absence of adhesive bonds or mechanical connections in these integrated parts enhances their structural integrity and longevity, making them more reliable under the demanding conditions encountered in agricultural machinery and other heavy-duty applications. This design approach simplifies the manufacturing process and ensures that the assembled tire is robust and capable of withstanding significant stresses and strains.

A method according to the present invention is preferred, wherein the forming in step i) is a molding process, preferably Injection Molding, Compression Molding, Blow Molding, or Thermoforming.

A method according to the present invention is preferred, wherein the forming in step ii) is a molding process, preferably Injection Molding, Compression Molding, Blow Molding, Rotational Molding or Thermoforming.

The advantage of using a molding process, preferably Injection Molding, Compression Molding, Blow Molding, or Thermoforming, lies in the precise control and efficiency these techniques offer in manufacturing semi-pneumatic tires. Injection molding allows for high precision in creating complex shapes and consistent material distribution, which is crucial for ensuring uniform sidewall thickness and structural integrity. Compression molding is beneficial for producing large, durable parts with excellent strength and uniformity. Blow molding is ideal for creating hollow parts with seamless integration, ensuring the continuous hollow space within the tire is evenly formed. Thermoforming provides flexibility in shaping and molding the tire components, allowing for detailed customization and efficient production. Collectively, these molding processes enhance the quality, durability, and performance of semi-pneumatic tires, making them highly suitable for demanding applications in agricultural machinery and heavy vehicles. These methods also streamline the production process, reduce material waste, and improve overall manufacturing efficiency. Previously, these processes could not be used for the production of semi-pneumatic tires that consist of a single integrated part.

Among the molding processes described above in step i) and ii), injection molding is particularly preferred because it offers several advantages. Injection molding allows for high precision in creating complex shapes and ensures consistent material distribution, which is crucial for achieving uniform sidewall thickness and structural integrity in the semi-pneumatic tires. This process also enables faster production cycles, higher efficiency, and greater scalability, making it ideal for large-scale manufacturing. Additionally, injection molding reduces material waste and allows for the incorporation of various additives and reinforcements, enhancing the overall performance and durability of the tires.

A method according to the present invention is preferred, wherein the method comprises additionally the following step
a) applying an adhesive composition on A) the central piece (9) and/or B) the first and/or the second connecting pieces (7,8),
wherein step a) is preferably performed before step iii).

The advantage of applying an adhesive composition to the central piece and/or the first and second connecting pieces before assembling them into the final tire structure lies in the enhanced bonding and structural integrity this step provides. By ensuring a secure attachment between the parts, the adhesive helps to prevent separation under stress, increasing the overall durability and reliability of the tire. This is particularly important for semi-pneumatic tires used in demanding applications, such as agricultural machinery, where they are subjected to significant forces and impacts. The adhesive layer contributes to a more cohesive structure, improving performance and extending the tire's lifespan. However, the use of adhesives can be optional, as our own studies have shown that the sealing and stability are sufficient even without adhesives, especially when the central piece and the connecting pieces fit well together.

A method according to the present invention is preferred, wherein the method comprises additionally the following step
a) applying a primer composition on A) the central piece (9) and/or B) the first and/or the second connecting pieces (7,8),
wherein step aa) is preferably performed before step a). A primer composition can be applied before the adhesive to enhance the bonding strength and durability of the connection. A primer composition, also called adhesion promoter or chemical bridges, function as a bonding layer between the substrate and the adhesive, and improve the adhesion.

A method according to the present invention is preferred, wherein the method comprises additionally the following step
iv) mounting the tire produced in step iii) onto a rim.

This step results in the creation of a wheel according to the present invention that integrates the semi-pneumatic tire with the wheel rim, ready for practical application. By performing this mounting step, the manufacturing process ensures that the tire and rim are properly aligned and securely fitted, which enhances the overall performance and reliability of the wheel.

A further aspect of the present invention is a semi-pneumatic tire (1) comprising or consisting of
a tread (2) adapted to contact a ground surface as the semi-pneumatic tire (1) rotates about an axis of rotation,
a base (3) arranged predominantly parallel to the tread (2), and
a first sidewall (4) and a second sidewall (5), each extending radially outward from the tread (2) to the base (3), wherein the sidewalls (4, 5) are predominantly parallel to each other,
wherein the tread (2), the base (4) and the sidewalls (4, 5) collectively define a continuous hollow space (6) around the circumference of the tire (1),
characterized in that the base (3) consists of a first connecting piece (7), a second connecting piece (8) and a middle piece (9), wherein the middle piece (9) is positioned between the first and the second connecting pieces (7,8),
wherein the tread (2), the first sidewall (4), the second sidewall (5), the first connecting piece (7), and the second connecting piece (8) are a first integrated part, and the middle piece (9) is a second integrated part.

The tread (2) can be flat or have a pattern. It is also possible for the tread (2) to have projections designed to work soil.

A tire according to the present invention is preferred, wherein the first integrated part comprises or consists of a polymer, preferably an elastomer or a thermoplastic elastomer (TPE).

A tire according to the present invention is preferred, wherein the polymer for the first integrated part is selected from the group consisting of cis-1,4-polyisoprene natural rubber (NR), styrene-butadiene rubber, polybutadiene rubber (BR), ethylene propylene rubber (EPM), ethylene propylene diene rubber (EPDM), epichlorohydrin rubber (ECO), styrene-butadiene rubber (SBR), nitrile rubber (NBR), polyurethane (PU), and blends of the aforementioned polymers, or blends of one or more of the aforementioned polymers with one or more other polymers.

This choice of materials offers significant advantages, including enhanced flexibility and durability, which are crucial for absorbing shocks and withstanding the rigorous demands of agricultural machinery. Among the materials listed above, natural rubber (NR), styrene-butadiene rubber, are particularly preferred.

A tire according to the present invention is preferred, wherein the second integrated part comprises or consists of a polymer, preferably a thermoplastic, an elastomer, thermoplastic elastomer (TPE).

A tire according to the present invention is preferred, wherein the second integrated part comprises or consists of polyurethane (PU), thermoplastic polyurethane (TPU), expanded thermoplastic polyurethane (E-TPU), polyamide (PA), especially polyamide 6 (PA6), polypropylene (PP), polyvinyl chloride (PVC), polyethylene (PE) and blends of the aforementioned polymers, or blends of one or more of the aforementioned polymers with one or more other polymers.

These materials provide superior elasticity, abrasion resistance, and impact strength, which enhance the durability and performance of the semi-pneumatic tire. Additionally, their excellent mechanical properties, chemical resistance, and heat tolerance ensure that the tire can withstand the harsh conditions and heavy loads encountered in agricultural applications, leading to a longer lifespan and reduced maintenance needs. Moreover, these materials can be filled with reinforcements such as glass fibers, carbon fibers, aramid fibers, mineral fillers, or nanocomposites to further improve their strength, stiffness, and overall performance.

A tire according to the present invention is preferred, wherein the first integrated part has a lower modulus of elasticity and/or stiffness than the second integrated part. This characteristic provides significant advantages, such as improved shock absorption and enhanced ride comfort, as the first integrated part, being more flexible, can better conform to irregular surfaces and absorb impacts. Meanwhile, the second integrated part, with higher stiffness, ensures structural integrity and stability, which is essential for maintaining the tire's shape and supporting heavy loads, particularly in agricultural machinery.

It is advantageous if the first integrated part is soft and preferably made of an elastomer, while the second integrated part is hard and not made of an elastomer or thermoplast but is preferably made of a thermoplast. A tire according to the present invention is preferred, wherein the first integrated part has a lower Shore A than the than the second integrated part. For instance, the first integrated part may have a Shore A hardness in the range from 10 to 95, preferably in the range from 30 to 80, more preferably in the range from 50 to 70, ensuring flexibility and impact resistance, whereas the second integrated part (is preferably harder than the first integrated part and) has a Shore D hardness in the range from 50 to 95, preferably in the range from 55 to 80, more preferably in the range from 60 to 75 providing the necessary rigidity and support. This combination ensures that the tire can effectively manage the stresses and strains encountered during operation, leading to improved durability and performance. The hardness values provided herein can be measured according to the ISO 7619-1:2010 standard for Shore A and Shore D hardness.

A tire according to the present invention is preferred, wherein
a) the middle piece (9) and the first connecting piece (7) have one, two, or more interlocking indentations and projections, wherein the indentations and projections are preferably configured as tongue and groove,
   and/or
b) the middle piece (9) and the second connecting piece (8) have one, two, or more interlocking indentations and projections, wherein the indentations and projections are preferably configured as tongue and groove.

The interlocking indentations and projections, preferably configured as tongue and groove, provide significant advantages. These features enhance the mechanical bonding between the parts, ensuring a secure fit and alignment, which increases the structural integrity and stability of the tire. Additionally, the tongue and groove design helps in distributing stress and load more evenly across the connection points, reducing the likelihood of separation under heavy use or impact. This design also simplifies the assembly process, ensuring that the parts are correctly aligned during manufacturing, thereby improving overall production efficiency and consistency.

A tire according to the present invention is preferred, wherein the connecting pieces (7,8) each comprises a groove (13, 14) around the circumference of the tire (1) on the outer side, which is intended to accommodate a part of a rim. This design offers significant advantages, as it ensures a secure and precise fit between the tire and the rim. The grooves help to maintain the tire's position on the rim under various operating conditions, enhancing stability and safety. Additionally, this construction aids in the even distribution of loads and stresses across the tire and rim interface, reducing the risk of slippage or detachment during use. This secure fit is particularly beneficial for agricultural machinery, where the tire must withstand substantial forces and impacts while maintaining optimal performance.

A tire according to the present invention is preferred, wherein the grooves, the connecting pieces (7,8) and the middle piece (9) are arranged along an axis that runs parallel to the rotational axis of the tire. This arrangement offers several advantages, particularly for the invention. Aligning these components along a parallel axis ensures uniform distribution of forces and stresses during rotation, which enhances the structural integrity and longevity of the tire. It also improves the balance and stability of the tire, reducing vibration and wear during operation. This precise alignment facilitates easier assembly and maintenance, ensuring that all parts fit together seamlessly, thereby improving overall efficiency and performance, especially in demanding applications such as agricultural machinery where consistent reliability and durability are crucial.

A tire according to the present invention is preferred, wherein
a) the middle piece (9) and the first connecting piece (7) are bonded together with an adhesive
   and/or
b) the middle piece (9) and the second connecting piece (8) are bonded together with an adhesive.

The use of adhesive bonding between these components provides several advantages. It ensures a secure and durable connection, enhancing the overall structural integrity of the tire. This strong bond helps to prevent separation under high stress and load conditions, which is particularly beneficial in demanding applications such as agricultural machinery. Adhesive bonding also facilitates easier and more efficient assembly, ensuring precise alignment of the parts.

Moreover, our own studies have shown that it is also possible to forego the use of adhesives, as the tire can still achieve sufficient sealing and stability, especially when the middle piece (9) and the connecting pieces (7,8) are designed to fit well together. This flexibility in the manufacturing process can reduce production costs and simplify assembly, while still maintaining the high performance and durability required for the tire's intended applications.

A tire according to the present invention is preferred, wherein middle piece (9) on the side facing to the rotational axis of the tire extends over the first connecting piece (7) and/or over the second connecting piece (8). This design prevents the possibility of the tire being pulled out of the rim when subjected to upward forces. By extending the middle piece over the connecting pieces, the tire maintains a secure attachment to the rim, ensuring stability and safety during operation. This feature is particularly beneficial in applications where the tire is exposed to significant vertical stresses, such as in agricultural machinery, enhancing the overall durability and reliability of the tire. In this configuration, it is preferred that the second integrated part is not made from an elastomer (but preferably from a thermoplastic polymer), ensuring greater rigidity and strength to better support the structural integrity of the tire under demanding conditions.

A tire according to the present invention is preferred, wherein middle piece (9) on the side facing to the hollow space (6) of the tire extends over the first connecting piece (7) and/or over the second connecting piece (8). This configuration ensures that the internal components of the tire are securely enclosed, enhancing the structural integrity and preventing internal components from shifting or becoming dislodged during operation.

A tire according to the present invention is preferred, wherein the hollow space (6) is sealed airtight from the environment and does not comprise a valve passage or a valve. This airtight sealing provides several advantages, including preventing the ingress of dirt, moisture, and other contaminants that could degrade the tire's performance and longevity. Moreover, it eliminates the need for regular maintenance associated with checking and maintaining air pressure, which is particularly beneficial in applications such as agricultural machinery where reliability and low maintenance are crucial.

Regarding preferred embodiments of the above-mentioned tire according to the invention and possible combinations of one or more aspects of the invention specified herein, the explanations provided above for the inventive manufacturing method apply correspondingly, and vice versa.

A further aspect of the present invention is a wheel comprising or consisting of a rim and a tire according to the present invention. This combination ensures that the tire is optimally integrated with the rim, enhancing the overall performance and reliability of the wheel assembly.

A wheel according to the present invention is preferred, wherein the rim is formed from on piece or multiple pieces. This flexibility in rim construction allows for various design optimizations and manufacturing efficiencies. A one-piece rim can offer greater structural integrity and simplicity, while a multi-piece rim can provide easier maintenance and repair options, as well as potential cost savings in production.

A wheel according to the present invention is preferred, wherein the rim has a mounting option for an axle, where the axle corresponds to the rotation axis of the tire or wheel. This feature ensures secure and precise attachment of the wheel to the vehicle, facilitating efficient power transmission and stable performance. It is particularly advantageous in applications requiring high durability and reliability, such as agricultural machinery, where consistent alignment and robust mounting are essential for optimal operation.

A further aspect of the present invention is a roller comprising or consisting of a rim and a tire according to the present invention.

Regarding preferred embodiments of the above-mentioned wheel according to the invention and possible combinations of one or more aspects of the invention specified herein, the explanations provided above for the inventive manufacturing method and/or inventive tire apply correspondingly, and vice versa.

A further aspect of the present invention is a use of a tire according to the present invention or a wheel to the present invention as part of a vehicle, preferably as part of an agricultural machine, more preferably as part of an earth moving agricultural machine.

Regarding preferred embodiments of the above-mentioned use according to the invention and possible combinations of one or more aspects of the invention specified herein, the explanations provided above for the inventive manufacturing method and/or inventive tire and/or inventive wheel apply correspondingly, and vice versa.

In the context of one aspect of the present invention, preferably two or more of the aspects identified above as being preferred are realized at the same time; especially preferred are those combinations of such aspects, and of the corresponding features, that arise from the text above or the appended claims.

Further embodiments are apparent from the examples that are elucidated in more detail by means of the figures. In these figures:

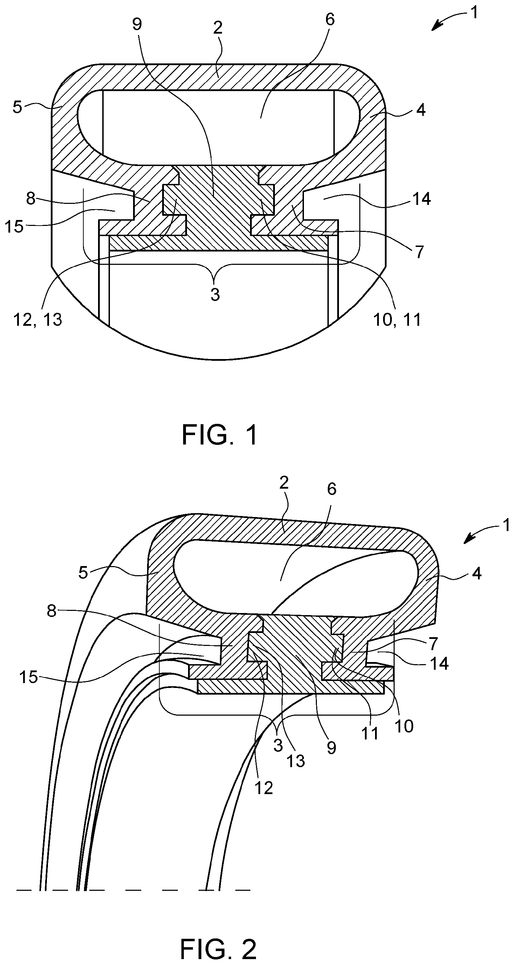

Figure 1 shows an inventive tire (1) in cross-section, with a view of the cross-sectional area. The tire (1) consists of a tread (2) adapted to contact a ground surface as the semi-pneumatic tire (1) rotates about an axis of rotation, a base (3) arranged predominantly parallel to the tread (2), and a first sidewall (4) and a second sidewall (5), each extending radially outward from the tread (2) to the base (3), wherein the sidewalls (4, 5) are predominantly parallel to each other, wherein the tread (2), the base (4) and the sidewalls (4, 5) collectively define a continuous hollow space (6) around the circumference of the tire (1), characterized in that the base (3) consists of a first connecting piece (7), a second connecting piece (8) and a middle piece (9), wherein the middle piece (9) is positioned between the first and the second connecting pieces (7,8), wherein the tread (2), the first sidewall (4), the second sidewall (5), the first connecting piece (7), and the second connecting piece (8) are a first integrated part, and the middle piece (9) is a second integrated part. The middle piece (9) and the first connecting piece (7) have one interlocking indentation (10) and projections (11), configured as tongue and groove, and the middle piece (9) and the second connecting piece (8) have one interlocking indentation (12) and projections (13), as tongue and groove. In one embodiment the middle piece (9) and the first connecting piece (7) are bonded together with an adhesive and/or the middle piece (9) and the second connecting piece (8) are bonded together with an adhesive. In this figure the first integrated part is made of polyurethane (PU), but it is possible to use other materials like cis-1,4-polyisoprene natural rubber (NR), styrene-butadiene rubber, polybutadiene rubber (BR), ethylene propylene rubber (EPM), ethylene propylene diene rubber (EPDM), epichlorohydrin rubber (ECO), styrene-butadiene rubber (SBR), nitrile rubber (NBR), polyurethane (PU), and blends of the aforementioned polymers, or blends of one or more of the aforementioned polymers with one or more other polymers. In this figure the second integrated part is made of polypropylene (PP), but it is possible to use other materials like polyurethane (PU), thermoplastic polyurethane (TPU), expanded thermoplastic polyurethane (E-TPU), polyamide (PA), especially polyamide 6 (PA6), polypropylene (PP), polyvinyl chloride (PVC), or polyethylene (PE) and blends of the aforementioned polymers, or blends of one or more of the aforementioned polymers with one or more other polymers. The first integrated part has a is softer than the than the second integrated part. The middle piece (9) on the side facing to the rotational axis of the tire extends over the first connecting piece (7) and over the second connecting piece (8). The hollow space (6) is sealed airtight from the environment and does not comprise a valve passage or a valve. The connecting pieces (7,8) each comprises a groove (14,15) around the circumference of the tire (1) on the outer side, which is intended to accommodate a part of a rim. The first integrated was made using a molding process, preferably Injection Molding. The second integrated was made using a molding process, preferably Injection Molding. The tread (2) can be flat (as shown) or have a pattern. It is also possible for the tread (2) to have projections designed to work the soil.

Figure 2 shows the inventive tire from Figure 1 in a perspective view.

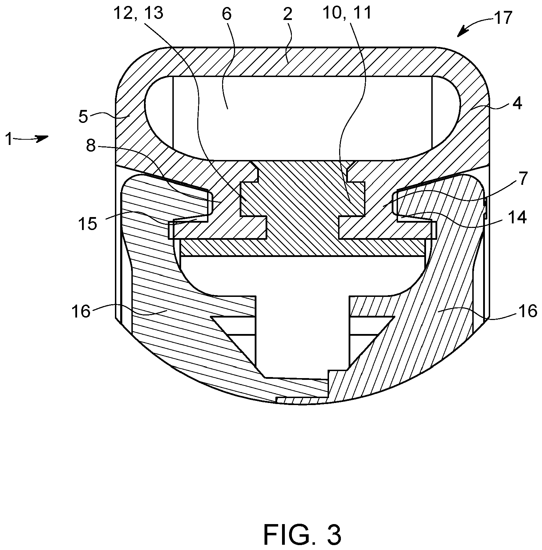

Figure 3 shows the inventive tire from Figure 1 in cross-section, with a view of the cross-sectional area, mounted on a rim (16), thus forming an inventive wheel (17).

## Claims

1. Semi-pneumatic tire (1) comprising or consisting of
a tread (2) adapted to contact a ground surface as the semi-pneumatic tire (1) rotates about an axis of rotation,
a base (3) arranged predominantly parallel to the tread (2), and
a first sidewall (4) and a second sidewall (5), each extending radially outward from the tread (2) to the base (3), wherein the sidewalls (4, 5) are predominantly parallel to each other,
wherein the tread (2), the base (4) and the sidewalls (4, 5) collectively define a continuous hollow space (6) around the circumference of the tire (1),
**characterized in that** the base (3) consists of a first connecting piece (7), a second connecting piece (8) and a middle piece (9), wherein the middle piece (9) is positioned between the first and the second connecting pieces (7,8),
wherein the tread (2), the first sidewall (4), the second sidewall (5), the first connecting piece (7), and the second connecting piece (8) are a first integrated part, and the middle piece (9) is a second integrated part.

2. Tire according to claim 1, wherein the first integrated part comprises or consists of a polymer, preferably an elastomer.

3. Tire according to claim 1 or 2, wherein the second integrated part comprises or consists of a polymer, preferably a thermoplastic, an elastomer, thermoplastic elastomer (TPE).

4. Tire according to claim 2 or 3, wherein the polymer is selected from the group consisting of cis-1,4-polyisoprene natural rubber (NR), styrene-butadiene rubber, polybutadiene rubber (BR), ethylene propylene rubber (EPM), ethylene propylene diene rubber (EPDM), epichlorohydrin rubber (ECO), styrene-butadiene rubber (SBR), nitrile rubber (NBR), blends of the aforementioned polymers, or blends of one or more of the aforementioned polymers with one or more other polymers.

5. Tire according to one of the previous claims, wherein the first integrated part has a lower modulus of elasticity and/or stiffness than the second integrated part.

6. Tire according to one of the previous claims, wherein
a) the middle piece (9) and the first connecting piece (7) have one, two, or more interlocking indentations and projections, wherein the indentations and projections are preferably configured as tongue and groove,
and/or
b) the middle piece (9) and the second connecting piece (8) have one, two, or more interlocking indentations and projections, wherein the indentations and projections are preferably configured as tongue and groove.

7. Tire according to one of the previous claims, wherein the connecting pieces (7,8) each comprises a groove around the circumference of the tire (1) on the outer side, which is intended to accommodate a part of a rim.

8. Tire according to claim 7, wherein the grooves, the connecting pieces (7,8) and the middle piece (9) are arranged along an axis that runs parallel to the rotational axis of the tire.

9. Tire according to one of the previous claims, wherein
a) the middle piece (9) and the first connecting piece (7) are bonded together with an adhesive
and/or
b) the middle piece (9) and the second connecting piece (8) are bonded together with an adhesive.

10. Tire according to one of the previous claims, wherein middle piece (9) on the side facing to the rotational axis of the tire extends over the first connecting piece (7) and/or over the second connecting piece (8).

11. Tire according to one of the previous claims, wherein middle piece (9) on the side facing to the hollow space (6) of the tire extends over the first connecting piece (7) and/or over the second connecting piece (8).

12. Tire according to one of the previous claims, wherein the hollow space (6) is sealed airtight from the environment and does not comprise a valve passage or a valve.

13. Wheel comprising or consisting of a rim and a tire according to one of the previous claims.

14. Use of a tire according to one of the claims 1 to 12 or a wheel according to one of the claims 13 to 15 as part of a vehicle, preferably as part of an agricultural machine, more preferably as part of an earth moving agricultural machine.

15. A method for making a semi-pneumatic tire or a wheel comprising a semi-pneumatic tire, preferably a semi-pneumatic tire according to one of the previous claims, comprising the following steps:
i) forming a first integrated part comprising or consisting of a tread (2), a base (3), a first sidewall (4), a second sidewall (5), and a first connecting piece (7) a second connecting piece (8) of a base (3),
ii) forming a second integrated part comprising or consisting of a central piece (9),
and
iii) combining the first integrated part and the second integrated part into an assembly in which the central piece (9) is positioned between the first and the second connecting pieces (7,8) and the central piece (9) together with the first and the second connecting pieces (7,8) form a base (3) and the base (3), the tread (2) and the sidewalls (4, 5) collectively define a continuous hollow space (6) around the circumference of the tire (1).
